# EUROPEAN PATENT SPECIFICATION

(11) **EP 4 317 290 B1**
(45) Date of publication and mention of the grant of the patent: **16.10.2024**
(21) Application number: 22188548.6
(22) Date of filing: 03.08.2022
(51) Int. Cl.: C08K 5/5399

(54) **POLYCARBONATE COMPOSITION, METHOD FOR THE MANUFACTURE THEREOF, AND ARTICLES PREPARED THEREFROM**
POLYCARBONATZUSAMMENSETZUNG, VERFAHREN ZUR HERSTELLUNG DAVON UND DARAUS HERGESTELLTE ARTIKEL
COMPOSITION DE POLYCARBONATE, SON PROCÉDÉ DE FABRICATION ET ARTICLES PRÉPARÉS À PARTIR DE LA COMPOSITION

(43) Date of publication of application: 07.02.2024
(73) Proprietor: SHPP Global Technologies B.V., 4612 PX Bergen op Zoom (NL)
(72) Inventor: Yang, Jianmin, Shanghai (CN); Shan, Wei, Shanghai (CN); Gao, Rui, Shanghai (CN); Guo, Jingrong, Shanghai (CN)
(74) Representative: Balder IP Law, S.L.

(56) References cited:
- WO-A1-2021/233773
- US-A1- 2013 317 142

## Description

### BACKGROUND

The present disclosure relates to a polycarbonate composition, methods for the manufacture thereof, and articles comprising the polycarbonate composition.

Polycarbonates are useful in the manufacture of articles and components for a wide range of applications, from automotive parts to electronic appliances. Because of their broad use, it is desirable to provide polycarbonates with improved weathering performance and flame resistance. Previous efforts towards reducing the effects of weathering have included a coating having a high concentration of UV absorbing additives. For example, WO 2021/233773 A1 relates to balance among low-temperature impact performance, flame-retardancy, hydrolytic stability, anti-UV performance, and heat resistance for polycarbonate compounds for outdoor applications. The example IE3 describes compositions comprising a polycarbonate (66%), a polysiloxane-carbonate copolymer (26%) having a siloxane content of 6,5%, a phosphazene compound (3%) and a benzotriazole (0,3%) as a UV absorbing compound. It would be advantageous to provide polycarbonate compositions capable of resisting weathering effects without the need for a separate coating.

There accordingly remains a need in the art for thermoplastic compositions that have improved weathering performance and flame resistance. It would be a further advantage if thermoplastic compositions had good low-temperature impact resistance.

### SUMMARY

A polycarbonate composition comprises 40 to 88.9 weight percent of a polycarbonate; 10 to 30 weight percent of a polycarbonate-siloxane copolymer having a siloxane content of 5 to 40 weight percent, based on the total weight of the polycarbonate-siloxane copolymer; 0.1 to 5 weight percent of a triazine-containing UV absorbing agent; and 1 to 10 weight percent of a phosphazene flame retardant; wherein weight percent of each component is based on the total weight of the composition.

A method of making the polycarbonate composition comprises melt-mixing the components of the composition, and, optionally, extruding the composition.

Another aspect is an article comprising the composition.

The above described and other features are exemplified by the following detailed description.

### DETAILED DESCRIPTION

The present inventors have discovered that a desirable combination of properties can be obtained with a polycarbonate composition having particular amounts of a polycarbonate, a polycarbonate-siloxane copolymer, a triazine-containing UV absorbing agent, and phosphazene flame retardant. The resulting composition can advantageously exhibit a combination of good UV resistance, flame retardance, and low temperature impact properties. A significant improvement is therefore provided by the present disclosure.

Accordingly, an aspect of the present disclose is a polycarbonate composition. The polycarbonate composition comprises a polycarbonate. "Polycarbonate" as used herein means a homopolymer or copolymer having repeating structural carbonate units of formula (1) 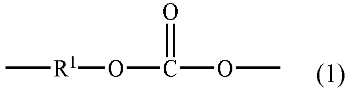 wherein at least 60 percent of the total number of R¹ groups are aromatic, or each R¹ contains at least one C₆₋₃₀ aromatic group. Preferably, each R¹ can be derived from a dihydroxy compound such as an aromatic dihydroxy compound of formula (2) or a bisphenol of formula (3). 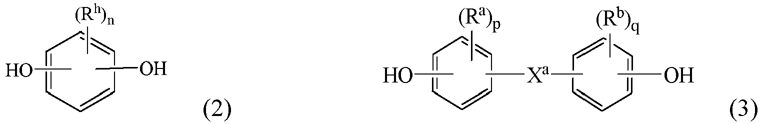 In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4.

In formula (3), R^{a} and R^{b} are each independently a halogen, C₁₋₁₂ alkoxy, or C₁₋₁₂ alkyl, and p and q are each independently integers of 0 to 4, such that when p or q is less than 4, the valence of each carbon of the ring is filled by hydrogen. In an aspect, p and q is each 0, or p and q is each 1, and R^{a} and R^{b} are each a C₁₋₃ alkyl group, preferably methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group, for example, a single bond, -O-, -S-, -S(O)-, -S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Examples of bisphenol compounds include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxyphenyl)-3,3,5-trimethylcyclohexane (isophorone bisphenol).

In an aspect, the polycarbonate comprises a bisphenol A polycarbonate homopolymer, also referred to as a bisphenol A homopolycarbonate. The bisphenol A polycarbonate homopolymer has repeating structural carbonate units of the formula (4). 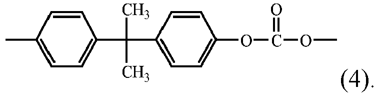 Bisphenol A polycarbonate homopolymers can be manufactured by processes such as interfacial polymerization and melt polymerization, which are known, and are described, for example, in WO 2013/175448 A1 and WO 2014/072923 A1, from bisphenol A ((2,2-bis(4-hydroxyphenyl)propane, or BPA). An endcapping agent can be included during polymerization to provide end groups, for example monocyclic phenols such as phenol, p-cyanophenol, and C₁-₂₂ alkyl-substituted phenols such as p-cumyl-phenol, resorcinol monobenzoate, and p-tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryloyl chloride, and mono-chloroformates such as phenyl chloroformate, alkyl-substituted phenyl chloroformates, p-cumyl phenyl chloroformate, and toluene chloroformate. Phenol and para-cumylphenol are specifically mentioned. Combinations of different endcapping agents can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 4.0 weight percent (wt%), for example, 0.05 to 2.0 wt%. Combinations comprising linear polycarbonates and branched polycarbonates can be used.

The bisphenol A polycarbonate homopolymer can be a linear bisphenol A polycarbonate homopolymer, optionally endcapped with phenol or para-cumylphenol, and having a weight average molecular weight of 10,000 to 100,000 grams per mole (g/mol), preferably 15,000 to 40,000 g/mol, as measured by gel permeation chromatography (GPC), using a crosslinked styrene-divinylbenzene column and calibrated to bisphenol A polycarbonate references. GPC samples are prepared at a concentration of 1 milligram per milliliter (mg/mL) and are eluted at a flow rate of 1.5 ml per minute. The bisphenol A polycarbonate homopolymer can comprise a linear bisphenol A polycarbonate homopolymer having a weight average molecular weight of 15,000 to 25,000 grams per mole, preferably 17,000 to 25,000 grams per mole, as determined by GPC. The bisphenol A polycarbonate homopolymer can comprise a linear bisphenol A polycarbonate homopolymer having a weight average molecular weight of 26,000 to 40,000 grams per mole, preferably 27,000 to 35,000 grams per mole, as determined by GPC.

In an aspect, more than one bisphenol A polycarbonate homopolymer can be present. For example, the bisphenol A polycarbonate homopolymer can comprise a first bisphenol A polycarbonate homopolymer having a weight average molecular weight of 15,000 to 25,000 g/mol or 17,000 to 23,000 g/mol or 18,000 to 22,000 g/mol, and a second bisphenol A polycarbonate homopolymer having a weight average molecular weight of 26,000 to 40,000 g/mol or 26,000 to 35,000 g/mol, each measured by GPC using BPA homopolycarbonate standards. The weight ratio of the first bisphenol A polycarbonate homopolymer relative to the second bisphenol A polycarbonate homopolymer can be 10:1 to 1:10, for example 5:1 to 1: 5, or 3:1 to 1:3, or 2:1 to 1:2.

The polycarbonate can be present in an amount of 40 to 88.9 weight percent, based on the total weight of the polycarbonate composition. Within this range, the polycarbonate can be present in an amount of 45 to 85 weight percent, or 50 to 80 weight percent, or 55 to 85 weight percent, or 50 to 80 weight percent, or 60 to 85 weight percent, or 65 to 82 weight percent.

In addition to the polycarbonate, the composition comprises a polycarbonate-siloxane copolymer. Polycarbonate-siloxane copolymers are also known as polycarbonate-siloxanes. The polycarbonate-siloxane copolymer comprises carbonate repeat units and siloxane units. The carbonate units can be derived from an aromatic dihydroxy compound of formula (2) or a bisphenol of formula (3), as described above.

In an aspect the carbonate units can be bisphenol carbonate units derived from bisphenols of formula (3). A preferred bisphenol is BPA.

The siloxane units (also referred to as polysiloxane blocks) are optionally of formula (5) 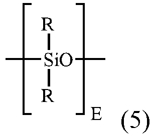 wherein each R is independently a C₁₋₁₃ monovalent organic group. For example, R can be a C₁₋₁₃ alkyl, C₁-₁₃ alkoxy, C₂-₁₃ alkenyl, C₂-₁₃ alkenyloxy, C₃-₆ cycloalkyl, C₃-₆ cycloalkoxy, C₆-₁₄ aryl, C₆₋₁₀ aryloxy, C₇-₁₃ arylalkylene, C₇-₁₃ arylalkylenoxy, C₇-₁₃ alkylarylene, or C₇-₁₃ alkylarylenoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

In an aspect, R is a C₁₋₃ alkyl, C₁₋₃ alkoxy, C₃₋₆ cycloalkyl, C₃₋₆ cycloalkoxy, C₆₋₁₄ aryl, C₆₋₁₀ aryloxy, C₇ arylalkylene, C₇ arylalkylenoxy, C₇ alkylarylene, or C₇ alkylarylenoxy. In an aspect, R is methyl, trifluoromethyl, or phenyl, preferably methyl.

The value of E in formula (5) can vary widely depending on the type and relative amount of each component in the polycarbonate composition, the desired properties of the composition, and like considerations. Generally, E has an average value of 2 to 1,000, or 2 to 500, 2 to 200, or 2 to 125, 5 to 80, or 10 to 70. In an aspect, E has an average value of 10 to 80 or 10 to 40, in still another aspect, E has an average value of 40 to 80 or 40 to 70, and in yet another aspect, E has an average value of 10 to 100, or 20 to 60, or 30 to 50.

In an aspect, the siloxane units are of formula (6) 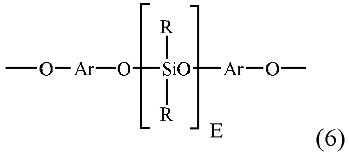 wherein E is as defined above in the context of formula (5); each R can be the same or different, and is as defined above in the context of formula (5); and Ar can be the same or different, and is a substituted or unsubstituted C₆₋₃₀ arylene, wherein the bonds are directly connected to an aromatic moiety. Ar groups in formula (6) can be derived from a C₆₋₃₀ dihydroxyarylene compound, for example a dihydroxy compound of formula (2). Exemplary dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane, or a combination thereof.

Specific examples of siloxane units of formula (6) include those of the formulas (6a) and (6b).

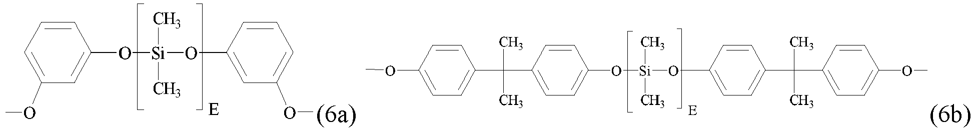

In an aspect, the siloxane units are of formula (7) 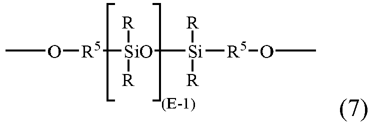 wherein Rand E are as described above in the context of formula (5), and each R⁵ is independently a divalent C₁-₃₀ organic group, and wherein the polymerized polysiloxane unit is the reaction residue of its corresponding dihydroxy compound. In an aspect, the polydiorganosiloxane blocks are of formula (8): 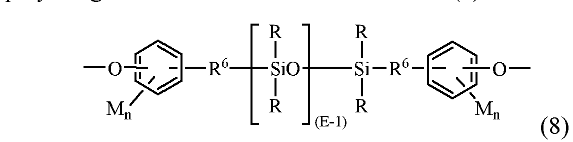 wherein R and E are as defined above in the context of formula (5). R⁶ in formula (8) is a divalent C₂-₈ aliphatic group. Each M in formula (8) can be the same or different, and can be a halogen, cyano, nitro, C₁-₈ alkylthio, C₁-₈ alkyl, C₁-₈ alkoxy, C₂-₈ alkenyl, C₂-₈ alkenyloxy, C₃-₈ cycloalkyl, C₃-₈ cycloalkoxy, C₆₋₁₀ aryl, C₆₋₁₀ aryloxy, C₇-₁₂ aralkyl, C₇-₁₂ arylalkylenoxy, C₇-₁₂ alkylarylene, or C₇-₁₂ alkylarylenoxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In an aspect, R is methyl, or a combination of methyl and trifluoropropyl, or a combination of methyl and phenyl. In an aspect, R is methyl, M is methoxy, n is one, and R⁶ is a divalent C₁₋₃ aliphatic group. Specific polydiorganosiloxane blocks are of the formula 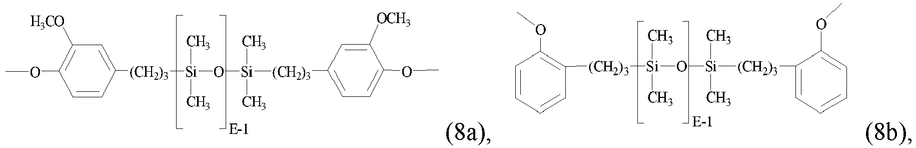 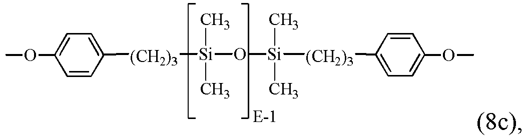 or a combination thereof, wherein E has an average value of 10 to 100, preferably 20 to 60, more preferably 30 to 50, or 40 to 50.

Blocks of formula (8) can be derived from the corresponding dihydroxy polydiorganosiloxanes by known methods. The polycarbonate-siloxane can be manufactured by introducing phosgene under interfacial reaction conditions into a mixture of bisphenol and an end capped polydimethylsiloxane (PDMS). Other known methods can also be used.

In an aspect, the poly(carbonate-siloxane) comprises carbonate units derived from bisphenol A, and repeating siloxane units (6a), (6b), (8a), (8b), (8c), or a combination thereof (preferably of formula 8a), wherein E has an average value of 10 to 100, preferably 20 to 80, or 30 to 70, more preferably 30 to 50 or 40 to 50.

The polycarbonate-siloxane copolymer can have a siloxane content of 5 to 40 weight percent, based on the total weight of the polycarbonate-siloxane copolymer. Within this range, the polycarbonate-siloxane copolymer can have a siloxane content of 10 to 40 weight percent, or greater than 10 to 40 weight percent, or 15 to 40 weight percent, or 10 to 30 weight percent, or greater than 10 to 30 weight percent, or 15 to 25 weight percent. As used herein, "siloxane content" of a poly(carbonate-siloxane) refers to the content of siloxane units based on the total weight of the polycarbonate-siloxane copolymer.

The polycarbonate-siloxane copolymer can have a weight average molecular weight of 18,000 to 50,000 g/mol, preferably 25,000 to 40,000 g/mol, more preferably 27,000 to 32,000 g/mol as measured by gel permeation chromatography using a crosslinked styrene-divinyl benzene column, at a sample concentration of 1 milligram per milliliter, and as calibrated with bisphenol A polycarbonate standards.

In an aspect, the composition comprises less than or equal to 5 weight percent or less than or equal to 1 weight percent, or less than or equal to 0.1 weight percent of a polycarbonate-siloxane having a siloxane content of less than 10 weight percent. Preferably a polycarbonate-siloxane having a siloxane content of less than 10 weight percent is excluded from the composition. In an aspect, the composition comprises less than or equal to 5 weight percent or less than or equal to 1 weight percent, or less than or equal to 0.1 weight percent of a polycarbonate-siloxane having a siloxane content of greater than 30 weight percent. Preferably a polycarbonate-siloxane having a siloxane content of greater than 30 weight percent is excluded from the composition.

The polycarbonate-siloxane copolymer can be present in the composition in an amount to provide a total siloxane content of 0.5 to 20 weight percent, or 1 to 10 weight percent, or 1 to 8 weight percent, or 1 to 6 weight percent or 1.5 to 4 weight percent, each based on the total weight of the polycarbonate composition.

The polycarbonate-siloxane copolymer can be present in the composition an amount of 10 to 30 weight percent, based on the total weight of the polycarbonate composition. Within this range, the polycarbonate-siloxane copolymer can be present in an amount of 12 to 28 weight percent, or 15 to 25 weight percent, or 17 to 23 weight percent, or 18 to 22 weight percent.

In addition to the polycarbonate and the polycarbonate-siloxane copolymer, the polycarbonate composition further comprises a triazine-containing UV absorbing agent. In an aspect, the triazine-containing UV absorbing agent can comprise a trisaryl-1,3,5-triazine UV absorbing agent. The triazine-containing UV absorbing agent has a triazine core 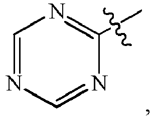 Including, for example, 2-(4,6-diphenyl-1,3,5-triazin-2-yl)-5-[(hexyl)oxy]-phenol (CAS Reg. No. 147315-50-2, commercially available as CHIGUARD 5577 from Chitec Technology), and 2-[4,6-bis(2,4-dimethylphenyl)-1,3,5-triazin-2-yl]-5-(octyloxy)phenol (CAS Reg. No. 2725-22-6, commercially available as CHIGUARD 1064 from Chitec Technology).

In a specific aspect, the triazine-containing UV absorbing agent can comprise 2-(4,6-diphenyl-1,3,5-triazin-2-yl)-5-[(hexyl)oxy]-phenol, 2-[4,6-bis(2,4-dimethylphenyl)-1,3,5-triazin-2-yl]-5-(octyloxy)phenol, or a combination thereof, preferably 2-(4,6-diphenyl-1,3,5-triazin-2-yl)-5-[(hexyl)oxy]-phenol.

The triazine-containing UV absorbing agent can be present in the composition in an amount of 0.1 to 5 weight percent, based on the total weight of the composition. Within this range, the triazine-containing UV absorbing agent can be present in an amount of 0.1 to 4 weight percent, or 0.1 to 3 weight percent, or 0.1 to 2 weight percent, or 0.5 to 3 weight percent, or 0.5 to 2 weight percent, or 0.5 to 1.5 weight percent.

The composition can minimize or exclude other UV absorbing agents. For example, the composition can comprise less than 1 weight percent, or less than 0.5 weight percent, or less than 0.1 weight percent, or less then 0.05 weight percent, or less than 0.01 weight percent of a UV absorbing agent other than a triazine-containing UV absorbing agent. In an aspect the composition can comprise less than 1 weight percent, or less than 0.5 weight percent, or less than 0.1 weight percent, or less than 0.05 weight percent, or less than 0.01 weight percent of a benzotriazole-containing UV absorbing agent. As used herein, "benzotriazole-containing UV absorbing agent" refers to those comprising a benzotriazole core 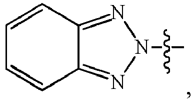 including, for example, 2-(2-hydroxy-3,5-di-cumyl)benzotriazole (CAS Reg. No. 70321-86-7, commercially available as TINUVIN 234 from BASF), and 2,2'-methylene-bis(6-(2H-benzotriazol-2-yl)-4-(1,1,3,3-tetramethylbutyl)) phenol (CAS Reg. No. 103597-45-1, commercially available as TINUVIN 360 from BASF or CHIGUARD 5431 from Chitec Technology).

The polycarbonate composition further comprises a phosphazene flame retardant. Phosphazenes (9) and cyclic phosphazenes (10) 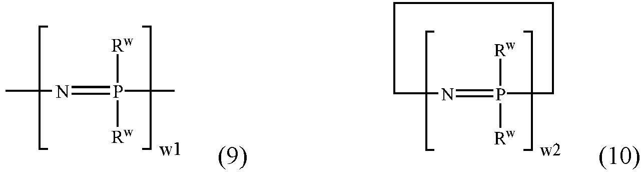 in particular can be used, wherein w1 is 3 to 10,000 and w2 is 3 to 25, preferably 3 to 7, and each R^{w} is independently a C₁₋₁₂ alkyl, alkenyl, alkoxy, aryl, aryloxy, or polyoxyalkylene. In the foregoing groups at least one hydrogen atom of these groups can be substituted with a group having an N, S, O, or F atom, or an amino group. For example, each R^{w} can be a substituted or unsubstituted phenoxy, an amino, or a polyoxyalkylene group. Any given R^{w} can further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. A combination of different phosphazenes can be used. A number of phosphazenes and their synthesis are described in H. R. Allcook, "Phosphorus-Nitrogen Compounds" Academic Press (1972), and J. E. Mark et al., "Inorganic Polymers" Prentice-Hall International, Inc. (1992).

In an aspect, the phosphazene flame retardant can comprise a cyclic phosphazene. In an aspect, the phosphazene flame retardant comprises phenoxy cyclotriphosphazene, octaphenoxy cyclotetraphosphazene decaphenoxy cyclopentaphosphazene, hexaphenoxycyclotriphosphazene or a combination thereof. In an aspect, the phosphazene can comprise hexaphenoxycyclotriphosphazene.

The phosphazene flame retardant can be present in an amount of 1 to 10 weight percent, based on the total weight of the composition. Within this range, the phosphazene flame retardant can be present in an amount of 2 to 8 weight percent, or 2 to 6 weight percent, or 2 to 5 weight percent, or 2.5 to 4.5 weight percent, or 3 to 4 weight percent.

The polycarbonate composition can optionally further comprise an additive composition comprising one or more additives ordinarily incorporated into polymer compositions of this type, provided that the one or more additives are selected so as not to significantly adversely affect the desired properties of the polycarbonate composition. Additives can include fillers, reinforcing agents, antioxidants, heat stabilizers, light stabilizers, plasticizers, lubricants, mold release agents, antistatic agents, colorants such as such as titanium dioxide, carbon black, and organic dyes, surface effect additives, radiation stabilizers, flame retardants, and anti-drip agents. A combination of additives can be used, for example a combination of a heat stabilizer, mold release agent, and ultraviolet light stabilizer. In general, the additives are used in the amounts generally known to be effective. For example, the total amount of the additives (other than any impact modifier, filler, or reinforcing agents) can be 0.1 to 10 weight percent, based on the total weight of the polycarbonate composition. In an aspect, the polycarbonate composition comprises no more than 5 weight percent based on the weight of the composition of a processing aid, a heat stabilizer, an antioxidant, a colorant, or a combination thereof.

The polycarbonate composition can optionally exclude other components not specifically described herein. For example, the polycarbonate composition can exclude thermoplastic polymers other than the polycarbonate (e.g., the bisphenol A homopolycarbonate), and the polycarbonate-siloxane copolymer. For example the composition can minimize or exclude polyesters (e.g., a polyester can be present in an amount of 1 weight percent or less, preferably wherein a polyester is excluded from the composition). The composition can optionally exclude a polycarbonate other than a bisphenol A homopolycarbonate and the polycarbonate-siloxane copolymer having a siloxane content of 10 to 30 weight percent based on the total weight of the polycarbonate-siloxane copolymer. For example a polyester-carbonate or a bisphenol A copolycarbonate different from the polycarbonate-siloxane copolymer can be minimized or excluded from the composition (e.g., can be present in an amount of 1 weight percent or less, preferably excluded from the composition). The polycarbonate composition can optionally exclude impact modifiers, for example silicone-based impact modifiers different from the poly(carbonate-siloxane) copolymer, methyl methacrylate-butadiene-styrene copolymers, acrylonitrile-butadiene, styrene copolymers, and the like, or a combination thereof. The composition can exclude halogenated flame retardants, for example brominated flame retardants, including brominated polycarbonate (e.g., a polycarbonate containing brominated carbonate includes units derived from 2,2',6,6'-tetrabromo-4,4'-isopropylidenediphenol (TBBPA) and carbonate units derived from at least one dihydroxy aromatic compound that is not TBBPA), brominated epoxies, and the like or combinations thereof. The composition can optionally exclude inorganic flame retardants.

In an aspect, the polycarbonate (e.g., a bisphenol A homopolycarbonate), the polycarbonate-siloxane copolymer, the triazine-containing UV absorbing agent and the phosphazene flame retardant sum to at least 80 weight percent, or at least 85 weight percent, or at least 90 weight percent, or at least 93 weight percent, or at least 95 weight percent, or at least 96 weight percent of the total weight of the polycarbonate composition.

In a specific aspect, the polycarbonate composition can comprise 65 to 82 weight percent of a polycarbonate; 15 to 25 weight percent of a polycarbonate-siloxane copolymer having a siloxane content of 10 to 30 weight percent based on the total weight of the polycarbonate-siloxane copolymer; 0.5 to 2 weight percent of a triazine-containing UV absorbing agent; and 2.5 to 4.5 weight percent of a phosphazene flame retardant. The polycarbonate can be a bisphenol A homopolymer comprising a linear bisphenol A polycarbonate homopolymer having a weight average molecular weight of 15,000 to 25,000 grams per mole, preferably 17,000 to 25,000 grams per mole, as determined by gel permeation chromatography relative to linear bisphenol A polycarbonate standards, and a linear bisphenol A polycarbonate homopolymer having a weight average molecular weight of 26,000 to 40,000 grams per mole, preferably 27,000 to 35,000 grams per mole, as determined by gel permeation chromatography relative to linear bisphenol A polycarbonate standards. The polycarbonate-siloxane copolymer can comprise bisphenol A carbonate repeating units and poly(dimethyl siloxane) repeating units and can have a siloxane content of 15 to 25 weight percent based on the total weight of the polycarbonate-siloxane copolymer. The triazine-containing UV absorbing agent can comprise 2-(4,6-diphenyl-1,3,5-triazin-2-yl)-5-[(hexyl)oxy]-phenol. The phosphazene can be hexaphenoxycyclotriphosphazene.

The polycarbonate composition can exhibit one or more desirable properties. For example, it was found that improved color stability, flame performance, and low temperature impact strength can unexpectedly be obtained by combining a polycarbonate, preferably a bisphenol A polycarbonate homopolymer, a polycarbonate-siloxane copolymer, a triazine-containing UV absorbing agent, and a phosphazene flame retardant. Without wishing to be bound by theory, it is believed that the unexpected combination of color stability, flame retardance, and impact properties is achieved by careful selection of the triazine-containing UV absorbing agent and the phosphazene flame retardant used in the composition.

The polycarbonate composition can further have good flame retardant properties. In an aspect of measuring flame retardance, the UL94 standard utilizes a rating of V0, V1, V2 or HB, wherein a rating of V0 is better than V1 or V2 and is required for many applications at the actual part thickness. Using this standard, the polycarbonate compositions are formed into a molded article having a given thickness. The thinner the article, the more difficult it is to achieve a rating of V0 or V1. In an aspect, a molded sample of the polycarbonate composition is capable of achieving UL-94 V0 rating at a thickness of 1.5 millimeters or less, preferably a UL-94 rating of V0 at a thickness of less than or equal to 1.2 millimeters.

The polycarbonate composition can further have good impact properties, in particular Izod notched impact strength. In an aspect, the composition can have an Izod notched impact energy of at least 600 joules per meter measured at -30°C on a sample of 3.2 mm thickness according to ASTM D256-10.

The polycarbonate composition can further have a color shift (delta E) value of less than or equal to 0.75 after 7 days of exposure to UVA 340 nm at 0.5 W/m, measured according to ASTM G154 and a 2.5 mm thick molded sample of the polycarbonate composition.

In an aspect, the polycarbonate composition can advantageously exhibit the above UL-94 rating, notched impact strength at a temperature of -30°C, and color shift.

The polycarbonate composition can comprise 40 to 88.9 weight percent of a polycarbonate; 10 to 30 weight percent of a polycarbonate-siloxane copolymer having a siloxane content of 5 to 40 weight percent based on the total weight of the polycarbonate-siloxane copolymer; 0.1 to 5 weight percent of a triazine-containing UV absorbing agent; and 1 to 10 weight percent of a phosphazene flame retardant; wherein weight percent of each component is based on the total weight of the composition. The polycarbonate can be a bisphenol A homopolymer, preferably comprising a linear bisphenol A polycarbonate homopolymer having a weight average molecular weight of 15,000 to 40,000 grams per mole, as determined by gel permeation chromatography relative to linear bisphenol A polycarbonate standards, preferably the bisphenol A polycarbonate homopolymer can comprise a linear bisphenol A polycarbonate homopolymer having a weight average molecular weight of 15,000 to 25,000 grams per mole, preferably 17,000 to 25,000 grams per mole, as determined by gel permeation chromatography relative to linear bisphenol A polycarbonate standards; or a linear bisphenol A polycarbonate homopolymer having a weight average molecular weight of 26,000 to 40,000 grams per mole, preferably 27,000 to 35,000 grams per mole, as determined by gel permeation chromatography relative to linear bisphenol A polycarbonate standards; or a combination thereof. The polycarbonate-siloxane copolymer can comprise bisphenol A carbonate repeating units and poly(dimethyl siloxane) repeating units. The polycarbonate-siloxane copolymer can have a siloxane content of 10 to 30 weight percent, or 15 to 25 weight percent based on the total weight of the polycarbonate-siloxane copolymer. The composition can comprise less than 5 weight percent, or less than 1 weight percent of a polycarbonate-siloxane copolymer having a siloxane content that is less than 10 weight percent based on the total weight of the polycarbonate siloxane, a polycarbonate-siloxane copolymer having a siloxane content that is greater than 30 weight percent based on the total weight of the polycarbonate siloxane, or both. Preferably the composition can be free of a polycarbonate-siloxane copolymer having a siloxane content that is less than 10 weight percent based on the total weight of the polycarbonate siloxane, a polycarbonate-siloxane copolymer having a siloxane content that is greater than 30 weight percent based on the total weight of the polycarbonate siloxane, or both. The triazine-containing UV absorbing agent can comprise a trisaryl-1,3,5-triazine UV absorbing agent, for example 2-(4,6-diphenyl-1,3,5-triazin-2-yl)-5-[(hexyl)oxy]-phenol or 2-4,6-bis(2,4-dimethylphenyl)-1,3,5-triazin-2-yl-5-(octyloxy)phenol. The phosphazene flame retardant can comprise a phenoxy phosphazene, preferably a hexaphenoxycyclotriphosphazene. The polycarbonate composition can further comprise 0.1 to 10 weight percent, based on the total weight of the polycarbonate composition, of an additive composition.

The polycarbonate composition can be manufactured by various methods known in the art. For example, powdered polycarbonate homopolymer, polycarbonate-siloxane, UV absorbing agent, and the phosphazene and other optional components are first blended, optionally with any fillers, in a high-speed mixer or by hand mixing. The blend is then fed into the throat of a twin-screw extruder via a hopper. Alternatively, at least one of the components can be incorporated into the composition by feeding it directly into the extruder at the throat and/or downstream through a side stuffer, or by being compounded into a masterbatch with a desired polymer and fed into the extruder. The extruder is generally operated at a temperature higher than that necessary to cause the composition to flow. The extrudate can be immediately quenched in a water bath and pelletized. The pellets so prepared can be one-fourth inch long or less as desired. Such pellets can be used for subsequent molding, shaping, or forming.

Shaped, formed, casted, or molded articles comprising the polycarbonate composition are also provided. The polycarbonate composition can be molded into useful shaped articles by a variety of methods, such as injection molding, extrusion, rotational molding, blow molding, and thermoforming. The article can be a molded article, a thermoformed article, an extruded film, an extruded sheet, a honeycomb structure, one or more layers of a multi-layer article, a substrate for a coated article, and a substrate for a metallized article. Exemplary articles can include computer and business machine housings such as housings for monitors, handheld electronic device housings such as housings for cell phones, electrical connectors, and components of lighting fixtures, ornaments, home appliances, roofs, greenhouses, sunrooms, swimming pool enclosures, electronic device casings and signs and the like. In addition, the polycarbonate compositions can be used for such applications as automotive panel and trim. Examples of suitable articles are exemplified by but are not limited to aircraft, automotive, truck, military vehicle (including automotive, aircraft, and water-borne vehicles), scooter, and motorcycle exterior and interior components, including panels, quarter panels, rocker panels, trim, fenders, doors, deck-lids, trunk lids, hoods, bonnets, roofs, bumpers, fascia, grilles, mirror housings, pillar appliqués, cladding, body side moldings, wheel covers, hubcaps, door handles, spoilers, window frames, headlamp bezels, headlamps, tail lamps, tail lamp housings, tail lamp bezels, license plate enclosures, roof racks, and running boards; enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings; personal water-craft; jet-skis; pools; spas; hot tubs; steps; step coverings; building and construction applications such as glazing, roofs, windows, floors, decorative window furnishings or treatments; treated glass covers for pictures, paintings, posters, and like display items; wall panels, and doors; counter tops; protected graphics; outdoor and indoor signs; enclosures, housings, panels, and parts for automatic teller machines (ATM); computer; desk-top computer; portable computer; lap-top computer; hand held computer housings; monitor; printer; keyboards; FAX machine; copier; telephone; phone bezels; mobile phone; radio sender; radio receiver; enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; shoe laces; articles made from plastic-wood combinations; golf course markers; utility pit covers; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated painted articles; coated dyed articles; coated fluorescent articles; coated foam articles; and like applications. In an aspect, the article can be for telecommunications applications, for example for a fifth generation (5G) communication article (e.g., a 5G base station, a 5G base station antenna housing, a 5G cell tower component, a 5G radome, etc.).

This disclosure is further illustrated by the following examples, which are nonlimiting.

### EXAMPLES

Materials used for the following examples are described in Table 1.

**Table 1**

| Component | Description | Supplier |
|---|---|---|
| PC-1 | Linear bisphenol A polycarbonate, CAS Reg. No, 25971-63-5, having a molecular weight (Mw) of 30,000 - 31,000 grams per mole, as determined by gel permeation chromatography using polystyrene standards and calculated for polycarbonate, produced by interfacial polymerization and endcapped with p-cumylphenol | SABIC |
| PC-2 | Linear bisphenol A polycarbonate having a Mw of 20,000-22,000 grams per mole, as determined by gel permeation chromatography using polystyrene standards and calculated for polycarbonate, produced by interfacial polymerization and endcapped with p-cumylphenol | SABIC |
| PC-Si | Poly(bisphenol A carbonate-dimethylsiloxane) copolymer produced via interfacial polymerization, 20 wt% siloxane, average siloxane block length = 45 units (D45), Mw = 29,000-31,000 g/mol, as determined by GPC using polystyrene standards and calculated for polycarbonate, para-cumylphenol (PCP) end-capped, PDI = 2-3 | SABIC |
| PPZ | Hexaphenoxycyclotriphosphazene, CAS Reg. No. 1184-10-7 | Weihai Jinwei ChemIndustry Co.,Ltd |
| TZN-1 | 2-4,6-bis(2,4-dimethylphenyl)-1,3,5-triazin-2-yl-5-(octyloxy)phenol, CAS Reg. No. 2725-22-6,CAS Reg. No. 2725-22-6 | Chitec |
| TZN-2 | 2-(4,6-Diphenyl-1,3,5-triazin-2-yl)-5-[(hexyl)oxy]-phenol, CAS Reg. No. 147315-50-2 | Chitec |
| BZT-1 | 2-(2-hydroxy-3,5-di-cumyl)benzotriazole, CAS Reg. No. 70321-86-7, CAS Reg. No. 70321-86-7 | BASF |
| BZT-2 | 2,2'-methylene-bis(6-(2H-benzotriazol-2-yl)-4-(1,1,3,3-tetramethylbutyl)) phenol, CAS Reg. No. 103597-45-1 | BASF |
| TSAN | Poly(styrene-acrylonitrile)-encapsulated polytetrafluoroethylene, containing 50 weight percent polytetrafluoroethylene; obtained as INP449 | SABIC |
| KSS | Potassium diphenylsulfonesulfonate, CAS Reg. No. 63316-43-8 | Arichem |
| PETS | Pentaerythritol tetrastearate | Longsha |
| TBPP | Tris(2,4-di-tert-butylphenyl) phosphite, available as IRGAFOS 168 | BASF |
| TiO₂ | Titanium dioxide, CAS No. 13463-67-7 | Kronos |
| CB | Carbon black, CAS No. 1333-86-4 | Cabot/Birla |
| PY138 | Pigment yellow 138, CAS Reg. No. 30125-47-4 | BASF/Keystone |

The formulations were compounded on a Toshiba TEM-37BS extruder using an internal screw configuration of L-3-1B. The raw materials were blended and fed to the extruder via a throat feeder. A typical extrusion profile is shown in Table 2.

**Table 2**

| Barrel Size | mm | 1500 |
|---|---|---|
| Screw Design | / | L-3-1B |
| Die | mm | 4 |
| Zone 1 Temp | °C | 50 |
| Zone 2 Temp | °C | 100 |
| Zone 3 Temp | °C | 265 |
| Zone 4-8 Temp | °C | 265 |
| Zone 9 Temp | °C | 265 |
| Zone 10-11 Temp | °C | 265 |
| Die Temp | °C | 265 |
| Screw speed | rpm | 400 |
| Throughput | kg/hr | 40 |
| Vacuum 1 | MPa | -0.08 |

Molded parts were injection molded using the typical injection molding conditions shown in Table 3.

**Table 3**

| | | Specimen Type | |
|---|---|---|---|
| | | Mechanical, HDT & color plates | Flame bars |
| Pre-drying time | Hour | 3 | 3 |
| Pre-drying Temp | °C | 120 | 120 |
| Hopper Temp | °C | 50 | 50 |
| Zone 1 Temp | °C | 275 | 280 |
| Zone 2 Temp | °C | 280 | 285 |
| Zone 3 Temp | °C | 285 | 285 |
| Nozzle Temp | °C | 280 | 285 |
| Mold Temp | °C | 75 | 85 |
| Holding pressure | bar | 700 | 800 |

Sample preparation and testing methods are described in Table 4.

**Table 4**

| Test and Condition | Unit | Specimen | Standard |
|---|---|---|---|
| Melt Flow Rate (MFR), 300°C/1.2kg | g/10min | Pellet, pre-dried | ASTM D 1238 |
| Izod Impact, notched, various temp | J/m | 3.2 mm bar | ASTM D 256 |
| Tensile Modulus, 5 mm/min | MPa | Type I bar | ASTM D 638 |
| Tensile Stress at yield, Type I, 50 mm/min | MPa | Type I bar | ASTM D 638 |
| Tensile stress at break, Type I, 50 mm/min | Mpa | Type I bar | ASTM D 638 |
| Tensile Strain at yield, Type I, 50 mm/min | % | Type I bar | ASTM D 638 |
| Tensile Strain at break, Type I, 50 mm/min | % | Type I bar | ASTM D 638 |
| Heat Deflection Temperature (HDT), 1.82 MPa | °C | 3.2 mm flexural bar | ASTM D 648 |
| FR, normal @ 23 °C/50 % RH for 48 hrs | / | 127 x 12.7 x Thickness | UL 94 V test |
| FR, aging condition @ 70 °C for 168 hrs | / | 127 x 12.7 x Thickness | UL 94 V test |
| Color delta E after Xenon light exposure | / | 30 x 50 x 2.54mm | ASTM G155 |
| Color delta E after UVA 340nm, 0.5W/m², no water spray | / | 30 x 50 x 2.54mm | QUV machine |

### Examples 1-7

Table 5 shows the compositions and properties for the compositions according to Examples 1-7. Comparative examples are indicated with an asterisk.

**Table 5**

| Component | Unit | 1* | 2* | 3* | 4* | 5* | 6* | 7* |
|---|---|---|---|---|---|---|---|---|
| PC-1 | wt% | 37.5 | 37.5 | 37.5 | 37.5 | 37.5 | 37.5 | 37.5 |
| PC-2 | wt% | 42.406 | 42.106 | 41.706 | 42.406 | 42.106 | 41.706 | 42.106 |
| PC-Si | wt% | 17.5 | 17.5 | 17.5 | 17.5 | 17.5 | 17.5 | 17.5 |
| TZN-1 | wt% | | | | | | | 0.6 |
| TZN-2 | wt% | | | | 0.3 | 0.6 | 1 | |
| BZT-1 | wt% | 0.3 | | | | | | |
| BZT-2 | wt% | | 0.6 | 1 | | | | |
| TSAN | wt% | 0.4 | 0.4 | 0.4 | 0.4 | 0.4 | 0.4 | 0.4 |
| KSS | wt% | 0.33 | 0.33 | 0.33 | 0.33 | 0.33 | 0.33 | 0.33 |
| PETS | wt% | | | | | | | |
| TBPP | wt% | 0.06 | 0.06 | 0.06 | 0.06 | 0.06 | 0.06 | 0.06 |
| TiO₂ | wt% | 1.5 | 1.5 | 1.5 | 1.5 | 1.5 | 1.5 | 1.5 |
| CB | wt% | 0.004 | 0.004 | 0.004 | 0.004 | 0.004 | 0.004 | 0.004 |
| Properties | | | | | | | | |
| MFR (6 mins) | g/10 min | 9.6 | 10.3 | 10.8 | 10.2 | 11.1 | 11.5 | 13.3 |
| MFR (18 mins) | g/10 min | 12 | 12.2 | 14.4 | 13.6 | 13.9 | 14.8 | 18.9 |
| MFR shift | % | 25% | 18% | 33% | 33% | 25% | 29% | 42% |
| Tens. Mod. | MPa | 2149 | 2142 | 2166 | 2165 | 2174 | 2147 | 2098 |
| Stress @ yield | MPa | 56 | 55 | 56 | 55 | 56 | 57 | 56 |
| Stress @ brk | MPa | 55 | 59 | 57 | 59 | 61 | 59 | 61 |
| Elong. @ yield | % | 5.7 | 5.8 | 5.8 | 5.6 | 5.7 | 5.6 | 5.7 |
| Elong. @ brk | % | 82 | 92 | 93 | 93 | 100 | 93 | 101 |
| Ductility, 23°C | % | 100 | 100 | 100 | 100 | 100 | 100 | 100 |
| NII, 23°C | J/m | 858 | 872 | 893 | 887 | 903 | 881 | 880 |
| NII-Std | J/m | 26.6 | 17 | 5.7 | 10 | 14 | 15 | 7 |
| Ductility, -20°C | % | 100 | 100 | 100 | 100 | 100 | 100 | 100 |
| NII, -20°C | J/m | 746 | 785 | 752 | 783 | 765 | 765 | 767 |
| NII-Std | J/m | 64 | 27 | 68 | 36 | 29 | 42 | 12 |
| Ductility, -30°C | % | 100 | 100 | 100 | 100 | 100 | 100 | 100 |
| NII, -30°C | J/m | 765 | 723 | 717 | 693 | 689 | 716 | 714 |
| NII-Std | J/m | 31 | 36 | 19 | 46 | 22 | 25 | 47 |
| Ductility, -40°C | % | 100 | 100 | 100 | 100 | 100 | 100 | 100 |
| NII, -40°C | J/m | 690 | 707 | 665 | 694 | 687 | 667 | 689 |
| NII-Std | J/m | 48 | 39 | 35 | 53 | 39 | 44 | 17 |
| UL94, normal | | V0 | V1 | V1 | V0 | V1 | V1 | V1 |
| UL94, aged | | V0 | V0 | V0 | V0 | V0 | V0 | V0 |
| ΔE, 7 days, UVA 340 | | 1.30 | 1.07 | 0.78 | 1.17 | 0.86 | 0.56 | 1.23 |
| ΔE, 14 days, UVA 340 | | 3.23 | 2.61 | 1.91 | 2.87 | 2.04 | 1.31 | 2.65 |
| ΔE, 21 days, UVA 340 | | 6.38 | 5.63 | 3.92 | 6.03 | 4.13 | 2.23 | 5.47 |
| ΔE, 28 days, UVA 340 | | 14.27 | 12.77 | 8.37 | 13.94 | 9.96 | 4.55 | 11.37 |
| ΔE, 35 days, UVA 340 | | 19.58 | 17.11 | 13.77 | 18.2 | 15.09 | 8.08 | 16.3 |
| ΔE, 10 days, Xenon | | 1.10 | | 0.80 | | | 0.60 | |
| ΔE, 20 days, Xenon | | 3.7 | | 1.9 | | | 1.4 | |

The results in Table 5 show that higher loading of UV absorber decreases the delta E due to lower yellowing after UVA, UVB or Xenon light aging. However, the flame retardant performance is undesirably decreased with increased UV absorber. It was noted that triazine-type UV absorbers (TZN-1, TZN-2) provided better color retaining performance than benzotriazole type UV absorbers (BZT-1, BZT-2), which was more obvious in compositions having high UV absorber loading. For example, comparing compositions 3* and 6*, the UVA testing results after 35 days gave delta E of 13.77 and 8.08 respectively, indicating improved performance with a triazine UV agent.

To obtain the desired flame performance in combination with the UV stability, additional formulations were prepared according to Table 6. As shown in Table 6, the compositions according to Examples 8-11 include a phosphazene flame retardant.

**Table 6**

| Component | Unit | 8* | 9 | 10* | 11 |
|---|---|---|---|---|---|
| PC-1 | wt% | 44.11 | 44.11 | 43.11 | 43.11 |
| PC-2 | wt% | 28 | 28 | 28 | 28 |
| PC-Si | wt% | 20 | 20 | 20 | 20 |
| PPZ | wt% | 3 | 3 | 4 | 4 |
| TZN-2 | wt% | | 1 | | 1 |
| BZT-2 | wt% | 1 | | 1 | |
| TSAN | wt% | 0.5 | 0.5 | 0.5 | 0.5 |
| PETS | wt% | 0.3 | 0.3 | 0.3 | 0.3 |
| TBPP | wt% | 0.06 | 0.06 | 0.06 | 0.06 |
| TiO₂ | wt% | 3 | 3 | 3 | 3 |
| PY138 | wt% | 0.03 | 0.03 | 0.03 | 0.03 |
| Properties | | | | | |
| MFR (6 mins) | g/10 min | 12.9 | 14.0 | 15.4 | 15.7 |
| MFR (18 mins) | g/10 min | 15.4 | 18.0 | 19.3 | 19.8 |
| MFR shift | % | 19% | 29% | 25% | 26% |
| Tens. Mod. | MPa | 2200 | 2225 | 2200 | 2229 |
| Stress @ yield | MPa | 56 | 57 | 56 | 57 |
| Stress @ brk | MPa | 56 | 52 | 59 | 57 |
| Elong. @ yield | % | 5.3 | 5.2 | 5.2 | 5.1 |
| Elong. @ brk | % | 91 | 79 | 104 | 100 |
| Ductility, 23°C | % | 100 | 100 | 100 | 100 |
| NII, 23°C | J/m | 891 | 918 | 894 | 922 |
| NII-Std | J/m | 31 | 8 | 36 | 12 |
| Ductility, -30°C | % | 100 | 100 | 100 | 100 |
| NII, -30°C | J/m | 611 | 717 | 699 | 705 |
| NII-Std | J/m | 30 | 27 | 20 | 27 |
| Ductility, -40°C | % | 20 | 100 | 0 | 100 |
| NII, -40°C | J/m | 378 | 618 | 636 | 628 |
| NII-Std | J/m | 60 | 63 | 36 | 34 |
| UL94, normal, 1.2 mm | | V0 | V0 | V0 | V0 |
| UL94, aged, 1.2 mm | | V0 | V0 | V0 | V0 |
| UL94, normal, 1.5 mm | | V0 | V0 | | |
| UL94, aged, 1.5 mm | | V0 | V0 | | |

As shown in Table 6, the presence of PPZ (e.g., 3 to 4 weight percent) provided robust flame performance, achieving a rating of V0 at thicknesses of 1.2 and 1.5 millimeters. It was also noted that benzotriazole-type UV agents provided decreased low temperature impact performance, while equivalent loadings of triazine-type UV agents provided improved low temperature impact properties.

Compositions were further evaluated for low temperature impact performance and UV weathering color retention. The results are shown in Table 7.

**Table 7**

| Component | Unit | 12* | 13 | 14 |
|---|---|---|---|---|
| PC-1 | wt% | 35.5 | 49.61 | 54.61 |
| PC-2 | wt% | 40.806 | 24.026 | 15.026 |
| PC-Si | wt% | 20 | 20 | 20 |
| PPZ | wt% | | 3 | 7 |
| TZN-2 | wt% | 1 | 1 | 1 |
| TSAN | wt% | 0.5 | 0.5 | 0.5 |
| KSS | wt% | 0.3 | | |
| PETS | wt% | 0.3 | 0.3 | 0.3 |
| TBPP | wt% | 0.06 | 0.06 | 0.06 |
| TiO₂ | wt% | 1.5 | 1.5 | 1.5 |
| CB | wt% | 0.004 | 0.004 | 0.004 |
| Properties | | | | |
| MFR (6 mins) | g/10 min | 10.9 | 11.0 | 12.7 |
| Ductility, 23°C | % | 100 | 100 | 100 |
| NII, 23°C | J/m | 860 | 968 | 989 |
| NII-Std | J/m | 35 | 31 | 27 |
| Ductility, -30°C | % | 100 | 100 | 100 |
| NII, -30°C | J/m | 675 | 738 | 752 |
| NII-Std | J/m | 19 | 26 | 12 |
| Ductility, -40°C | % | 100 | 100 | 0 |
| NII, -40°C | J/m | 578 | 617 | 242 |
| NII-Std | J/m | 40 | 81 | 36 |
| ΔE, 7 days, UVA 340 | | 0.86 | 0.74 | 0.55 |
| ΔE, 14 days, UVA 340 | | 1.98 | 1.68 | 1.29 |
| ΔE, 21 days, UVA 340 | | 3.54 | 3.11 | 2.46 |

As shown in Table 7, the presence of PPZ provided a more robust flame performance compared to KSS as the flame retardant, and further, better color retention was also observed after 21 days of UV-A exposure at 340 nm, 0.5 W/m² (no water spray). Higher loadings of PPZ (e.g., 7% or more) were observed to reduce low temperature impact properties.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect" means that a particular element described in connection with the aspect is included in at least one aspect described herein, and may or may not be present in other aspects. The term "combination thereof' as used herein includes one or more of the listed elements, and is open, allowing the presence of one or more like elements not named. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, saturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo atoms (e.g., bromo and fluoro), or only chloro atoms can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)z-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇-₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example - CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A polycarbonate composition comprising:
40 to 88.9 weight percent of a polycarbonate;
10 to 30 weight percent of a polycarbonate-siloxane copolymer having a siloxane content of 5 to 40 weight percent, based on the total weight of the polycarbonate-siloxane copolymer;
0.1 to 5 weight percent of a triazine-containing UV absorbing agent; and
1 to 10 weight percent of a phosphazene flame retardant;
wherein weight percent of each component is based on the total weight of the composition.

2. The polycarbonate composition of claim 1, wherein the polycarbonate is a bisphenol A homopolymer, preferably comprising a linear bisphenol A polycarbonate homopolymer having a weight average molecular weight of 15,000 to 40,000 grams per mole, as determined by gel permeation chromatography relative to linear bisphenol A polycarbonate standards.

3. The polycarbonate composition of claim 1 or 2, wherein the polycarbonate comprises
a linear bisphenol A polycarbonate homopolymer having a weight average molecular weight of 15,000 to 25,000 grams per mole, preferably 17,000 to 25,000 grams per mole, as determined by gel permeation chromatography relative to linear bisphenol A polycarbonate standards; or
a linear bisphenol A polycarbonate homopolymer having a weight average molecular weight of 26,000 to 40,000 grams per mole, preferably 27,000 to 35,000 grams per mole, as determined by gel permeation chromatography relative to linear bisphenol A polycarbonate standards; or
a combination thereof.

4. The polycarbonate composition of any of claims 1 to 3, wherein the polycarbonate-siloxane copolymer comprises bisphenol A carbonate repeating units and poly(dimethyl siloxane) repeating units.

5. The polycarbonate composition of any of claims 1 to 4, wherein the polycarbonate-siloxane copolymer has a siloxane content of 10 to 30 weight percent, or 15 to 25 weight percent based on the total weight of the polycarbonate-siloxane copolymer.

6. The polycarbonate composition of any of claims 1 to 5, wherein the composition comprises less than 5 weight percent, or less than 1 weight percent of a polycarbonate-siloxane copolymer having a siloxane content that is less than 10 weight percent based on the total weight of the polycarbonate siloxane, a polycarbonate-siloxane copolymer having a siloxane content that is greater than 30 weight percent based on the total weight of the polycarbonate siloxane, or both,
preferably wherein the composition is free of a polycarbonate-siloxane copolymer having a siloxane content that is less than 10 weight percent based on the total weight of the polycarbonate siloxane, a polycarbonate-siloxane copolymer having a siloxane content that is greater than 30 weight percent based on the total weight of the polycarbonate siloxane, or both.

7. The polycarbonate composition of any of claims 1 to 6, wherein the triazine-containing UV absorbing agent comprises a trisaryl-1,3,5-triazine UV absorbing agent.

8. The polycarbonate composition of any of claims 1 to 7, wherein the triazine-containing UV absorbing agent comprises 2-(4,6-diphenyl-1,3,5-triazin-2-yl)-5-[(hexyl)oxy]-phenol or 2-4,6-bis(2,4-dimethylphenyl)-1,3,5-triazin-2-yl-5-(octyloxy)phenol.

9. The polycarbonate composition of any of claims 1 to 8, wherein the phosphazene flame retardant comprises a phenoxy phosphazene, preferably a hexaphenoxycyclotriphosphazene.

10. The polycarbonate composition of any of claims 1 to 9, wherein the polycarbonate composition further comprises 0.1 to 10 weight percent, based on the total weight of the polycarbonate composition, of an additive composition.

11. The polycarbonate composition of any of claims 1 to 10, comprising
65 to 82 weight percent of a polycarbonate;
15 to 25 weight percent of a polycarbonate-siloxane copolymer having a siloxane content of 10 to 30 weight percent based on the total weight of the polycarbonate-siloxane copolymer;
0.5 to 2 weight percent of a triazine-containing UV absorbing agent; and
2.5 to 4.5 weight percent of a phosphazene flame retardant.

12. The polycarbonate composition of claim 11, wherein
the polycarbonate is a bisphenol A homopolymer comprising
a linear bisphenol A polycarbonate homopolymer having a weight average molecular weight of 15,000 to 25,000 grams per mole, preferably 17,000 to 25,000 grams per mole, as determined by gel permeation chromatography relative to linear bisphenol A polycarbonate standards, and
a linear bisphenol A polycarbonate homopolymer having a weight average molecular weight of 26,000 to 40,000 grams per mole, preferably 27,000 to 35,000 grams per mole, as determined by gel permeation chromatography relative to linear bisphenol A polycarbonate standards;
the polycarbonate-siloxane copolymer comprises bisphenol A carbonate repeating units and poly(dimethyl siloxane) repeating units and has a siloxane content of 15 to 25 weight percent based on the total weight of the polycarbonate-siloxane copolymer;
the triazine-containing UV absorbing agent comprises 2-(4,6-diphenyl-1,3,5-triazin-2-yl)-5-[(hexyl)oxy]-phenol; and
the phosphazene is hexaphenoxycyclotriphosphazene.

13. The polycarbonate composition of any of claims 1 to 12, wherein a molded sample of the composition exhibits:
a delta E of less than or equal to 0.75 after exposure to UVA 340 nm at 0.5 W/m for 7 days;
a UL-94 rating of V0 at a thickness of 1.5 millimeters or less; preferably a UL-94 rating of V0 at a thickness of less than or equal to 1.2 millimeters; and
an Izod notched impact strength of greater than 600 joules per meter at a temperature of - 30°C, as determined according to ASTM D256-10.

14. A method of making the polycarbonate composition of any of claims 1 to 13, the method comprising melt-mixing the components of the composition, and, optionally, extruding the composition.

15. An article comprising the polycarbonate composition of any of claims 1 to 13, optionally wherein the article is a shaped, formed, casted, or molded article, preferably wherein the article is a housing for an electronic device, an electrical connector, a lighting component, an automotive component, an aircraft component, or a 5G communication system component.

## Patentansprüche

1. Eine Polycarbonat-Zusammensetzung, umfassend:
40 bis 88,9 Gewichtsprozent eines Polycarbonats;
10 bis 30 Gewichtsprozent eines Polycarbonat-Siloxan-Copolymers mit einem Siloxangehalt von 5 bis 40 Gewichtsprozent bezogen auf das Gesamtgewicht des Polycarbonat-Siloxan-Copolymers;
0,1 bis 5 Gewichtsprozent eines Triazin-haltigen UV-Absorptionsmittels; und
1 bis 10 Gewichtsprozent eines Phosphazen-Flammschutzmittels;
wobei der prozentuale Gewichtsanteil der einzelnen Komponenten auf dem Gesamtgewicht der Zusammensetzung basiert.

2. Die Polycarbonat-Zusammensetzung nach Anspruch 1, wobei das Polycarbonat ein Bisphenol-A-Homopolymer ist, das vorzugsweise ein lineares Bisphenol-A-Polycarbonat-Homopolymer mit einem gewichtsmittleren Molekulargewicht von 15.000 bis 40.000 Gramm pro Mol umfasst, bestimmt durch Gelpermeationschromatographie relativ zu linearen Bisphenol-A-Polycarbonat-Standards.

3. Die Polycarbonat-Zusammensetzung nach Anspruch 1 oder 2, wobei das Polycarbonat
ein lineares Bisphenol-A-Polycarbonat-Homopolymer mit einem gewichtsmittleren Molekulargewicht von 15.000 bis 25.000 Gramm pro Mol, vorzugsweise 17.000 bis 25.000 Gramm pro Mol, bestimmt durch Gelpermeationschromatographie relativ zu linearen Bisphenol-A-Polycarbonat-Standards; oder
ein lineares Bisphenol-A-Polycarbonat-Homopolymer mit einem gewichtsmittleren Molekulargewicht von 26.000 bis 40.000 Gramm pro Mol, vorzugsweise 27.000 bis 35.000 Gramm pro Mol, bestimmt durch Gelpermeationschromatographie relativ zu linearen Bisphenol-A-Polycarbonat Standards; oder
eine Kombination davon umfasst.

4. Die Polycarbonat-Zusammensetzung nach einem der Ansprüche 1 bis 3, wobei das Polycarbonat-Siloxan-Copolymer Bisphenol-A-Carbonat-Wiederholungseinheiten und Poly(dimethylsiloxan)-Wiederholungseinheiten umfasst.

5. Die Polycarbonat-Zusammensetzung nach einem der Ansprüche 1 bis 4, wobei das Polycarbonat-Siloxan-Copolymer einen Siloxangehalt von 10 bis 30 Gewichtsprozent, oder 15 bis 25 Gewichtsprozent, bezogen auf das Gesamtgewicht des Polycarbonat-Siloxan-Copolymers, aufweist.

6. Die Polycarbonat-Zusammensetzung nach einem der Ansprüche 1 bis 5, wobei die Zusammensetzung weniger als 5 Gewichtsprozent, oder weniger als 1 Gewichtsprozent eines Polycarbonat-Siloxan-Copolymers mit einem Siloxangehalt von weniger als 10 Gewichtsprozent bezogen auf das Gesamtgewicht des Polycarbonat-Siloxans, ein Polycarbonat-Siloxan-Copolymer mit einem Siloxangehalt von mehr als 30 Gewichtsprozent bezogen auf das Gesamtgewicht des Polycarbonat-Siloxans, oder beides umfasst,
wobei die Zusammensetzung vorzugsweise frei ist von einem Polycarbonat-Siloxan-Copolymer mit einem Siloxangehalt von weniger als 10 Gewichtsprozent bezogen auf das Gesamtgewicht des Polycarbonat-Siloxans, einem Polycarbonat-Siloxan-Copolymer mit einem Siloxangehalt von mehr als 30 Gewichtsprozent bezogen auf das Gesamtgewicht des Polycarbonat-Siloxans, oder beidem.

7. Die Polycarbonat-Zusammensetzung nach einem der Ansprüche 1 bis 6, wobei das Triazin-haltige UV-Absorptionsmittel ein Trisaryl-1,3,5-triazin UV-Absorptionsmittel umfasst.

8. Die Polycarbonat-Zusammensetzung nach einem der Ansprüche 1 bis 7, wobei das Triazin-haltige UV-Absorptionsmittel 2-(4,6-Diphenyl-1,3,5-triazin-2-yl)-5-[(hexyl)oxy]-phenol oder 2-4,6-Bis(2,4-dimethylphenyl)-1,3,5-triazin-2-yl-5-(octyloxy)phenol umfasst.

9. Die Polycarbonat-Zusammensetzung nach einem der Ansprüche 1 bis 8, wobei das Phosphazen-Flammschutzmittel ein Phenoxyphosphazen, vorzugsweise ein Hexaphenoxycyclotriphosphazen, umfasst.

10. Die Polycarbonat-Zusammensetzung nach einem der Ansprüche 1 bis 9, wobei die Polycarbonat-Zusammensetzung des Weiteren 0,1 bis 10 Gewichtsprozent, bezogen auf das Gesamtgewicht der Polycarbonat-Zusammensetzung, einer Additiv-Zusammensetzung umfasst.

11. Die Polycarbonat-Zusammensetzung nach einem der Ansprüche 1 bis 10, umfassend
65 bis 82 Gewichtsprozent eines Polycarbonats;
15 bis 25 Gewichtsprozent eines Polycarbonat-Siloxan-Copolymers mit einem Siloxangehalt von 10 bis 30 Gewichtsprozent bezogen auf das Gesamtgewicht des Polycarbonat-Siloxan-Copolymers;
0,5 bis 2 Gewichtsprozent eines Triazin-haltigen UV-Absorptionsmittels; und
2,5 bis 4,5 Gewichtsprozent eines Phosphazen-Flammschutzmittels.

12. Die Polycarbonat-Zusammensetzung nach Anspruch 11, wobei
das Polycarbonat ein Bisphenol-A-Homopolymer ist, umfassend
ein lineares Bisphenol-A-Polycarbonat-Homopolymer mit einem gewichtsmittleren Molekulargewicht von 15.000 bis 25.000 Gramm pro Mol, vorzugsweise 17.000 bis 25.000 Gramm pro Mol, bestimmt durch Gelpermeationschromatographie relativ zu linearen Bisphenol-A-Polycarbonat-Standards, und
ein lineares Bisphenol-A-Polycarbonat-Homopolymer mit einem gewichtsmittleren Molekulargewicht von 26.000 bis 40.000 Gramm pro Mol, vorzugsweise 27.000 bis 35.000 Gramm pro Mol, bestimmt durch Gelpermeationschromatographie relativ zu linearen Bisphenol-A-Polycarbonat-Standards;
das Polycarbonat-Siloxan-Copolymer Bisphenol-A-Carbonat-Wiederholungseinheiten und Poly(dimethylsiloxan)-Wiederholungseinheiten umfasst und einen Siloxangehalt von 15 bis 25 Gewichtsprozent bezogen auf das Gesamtgewicht des Polycarbonat-Siloxan-Copolymers aufweist;
das Triazin-haltige UV-Absorptionsmittel 2-(4,6-Diphenyl-1,3,5-triazin-2-yl)-5-[(hexyl)oxy]-phenol umfasst; und
das Phosphazen Hexaphenoxycyclotriphosphazen ist.

13. Die Polycarbonat-Zusammensetzung nach einem der Ansprüche 1 bis 12, wobei eine geformte Probe der Zusammensetzung aufweist:
ein Delta E von 0,75 oder weniger nach einer UVA-Exposition von 340 nm bei 0,5 W/m für 7 Tage;
eine UL-94-Rate von V0 bei einer Dicke von 1,5 Millimetern oder weniger; vorzugsweise eine UL-94-Rate von V0 bei einer Dicke von 1,2 Millimetern oder weniger; und
eine Izod-Kerbschlagzähigkeit von mehr als 600 Joule pro Meter bei einer Temperatur von -30°C, bestimmt nach ASTM D256-10.

14. Ein Verfahren zur Herstellung der Polycarbonat-Zusammensetzung nach einem der Ansprüche 1 bis 13, wobei das Verfahren das Schmelzmischen der Komponenten der Zusammensetzung und, gegebenenfalls, das Extrudieren der Zusammensetzung umfasst.

15. Ein Gegenstand umfassend die Polycarbonat-Zusammensetzung nach einem der Ansprüche 1 bis 13, wobei der Gegenstand optional ein gestalteter, gebildeter, gegossener oder geformter Gegenstand ist, wobei der Gegenstand vorzugsweise ein Gehäuse für ein elektronisches Gerät, ein elektrischer Verbinder, eine Beleuchtungskomponente, eine Automobilkomponente, eine Flugzeugkomponente oder eine 5G-Kommunikationssystemkomponente ist.

## Revendications

1. Composition de polycarbonate comprenant :
40 à 88,9 % en poids d'un polycarbonate ;
10 à 30 % en poids d'un copolymère de polycarbonate-siloxane ayant une teneur en siloxane de 5 à 40 % en poids par rapport au poids total du copolymère de polycarbonate-siloxane ;
0,1 à 5 % en poids d'un agent absorbant les UV contenant une triazine ; et
1 à 10 % en poids d'un retardateur d'inflammation phosphazène ;
dans laquelle le pourcentage en poids de chaque composant est basé sur le poids total de la composition.

2. Composition de polycarbonate selon la revendication 1, dans laquelle le polycarbonate est un homopolymère de bisphénol A, comprenant de préférence un homopolymère de polycarbonate de bisphénol A linéaire ayant une masse moléculaire moyenne en masse de 15 000 à 40 000 grammes par mole, telle que déterminée par chromatographie par perméation de gel par rapport à des étalons en polycarbonate de bisphénol A linéaire.

3. Composition de polycarbonate selon la revendication 1 ou 2, dans laquelle le polycarbonate comprend
un homopolymère de polycarbonate de bisphénol A linéaire ayant une masse moléculaire moyenne en masse de 15 000 à 25 000 grammes par mole, de préférence de 17 000 à 25 000 grammes par mole, telle que déterminée par chromatographie par perméation de gel par rapport à des étalons en polycarbonate de bisphénol A linéaire ; ou
un homopolymère de polycarbonate de bisphénol A linéaire ayant une masse moléculaire moyenne en masse de 26 000 à 40 000 grammes par mole, de préférence de 27 000 à 35 000 grammes par mole, telle que déterminée par chromatographie par perméation de gel par rapport à des étalons en polycarbonate de bisphénol A linéaire ; ou
une combinaison de ceux-ci.

4. Composition de polycarbonate selon l'une quelconque des revendications 1 à 3, dans laquelle le copolymère de polycarbonate-siloxane comprend des motifs répétitifs carbonate de bisphénol A et des motifs répétitifs poly(diméthylsiloxane).

5. Composition de polycarbonate selon l'une quelconque des revendications 1 à 4, dans laquelle le copolymère de polycarbonate-siloxane a une teneur en siloxane de 10 à 30 % en poids, ou de 15 à 25 % en poids, par rapport au poids total du copolymère de polycarbonate-siloxane.

6. Composition de polycarbonate selon l'une quelconque des revendications 1 à 5, laquelle composition comprend moins de 5 % en poids, ou moins de 1 % en poids d'un copolymère de polycarbonate-siloxane ayant une teneur en siloxane inférieure à 10 % en poids par rapport au poids total du polycarbonate-siloxane, d'un copolymère de polycarbonate-siloxane ayant une teneur en siloxane supérieure à 30 % en poids par rapport au poids total du polycarbonate-siloxane, ou des deux,
de préférence laquelle composition est exempte de copolymère de polycarbonate-siloxane ayant une teneur en siloxane inférieure à 10 % en poids par rapport au poids total du polycarbonate-siloxane, de copolymère de polycarbonate-siloxane ayant une teneur en siloxane supérieure à 30 % en poids par rapport au poids total du polycarbonate-siloxane, ou des deux.

7. Composition de polycarbonate selon l'une quelconque des revendications 1 à 6, dans laquelle l'agent absorbant les UV contenant une triazine comprend un agent absorbant les UV triaryl-1,3,5-triazine.

8. Composition de polycarbonate selon l'une quelconque des revendications 1 à 7, dans laquelle l'agent absorbant les UV contenant une triazine comprend le 2-(4,6-diphényl-1,3,5-triazin-2-yl)-5-[(hexyl)oxy]phénol ou le 2-4,6-bis(2,4-diméthylphényl)-1,3,5-triazin-2-yl-5-(octyloxy)phénol.

9. Composition de polycarbonate selon l'une quelconque des revendications 1 à 8, dans laquelle le retardateur d'inflammation phosphazène comprend un phénoxy-phosphazène, de préférence un hexaphénoxycyclotriphosphazène.

10. Composition de polycarbonate selon l'une quelconque des revendications 1 à 9, laquelle composition de polycarbonate comprend en outre 0,1 à 10 % en poids, par rapport au poids total de la composition de polycarbonate, d'une composition d'additifs.

11. Composition de polycarbonate selon l'une quelconque des revendications 1 à 10, comprenant
65 à 82 % en poids d'un polycarbonate ;
15 à 25 % en poids d'un copolymère de polycarbonate-siloxane ayant une teneur en siloxane de 10 à 30 % en poids par rapport au poids total du copolymère de polycarbonate-siloxane ;
0,5 à 2 % en poids d'un agent absorbant les UV contenant une triazine ; et
2,5 à 4,5 % en poids d'un retardateur d'inflammation phosphazène.

12. Composition de polycarbonate selon la revendication 11, dans laquelle
le polycarbonate est un homopolymère de bisphénol A comprenant
un homopolymère de polycarbonate de bisphénol A linéaire ayant une masse moléculaire moyenne en masse de 15 000 à 25 000 grammes par mole, de préférence de 17 000 à 25 000 grammes par mole, de préférence de 17 000 à 25 000 grammes par mole, telle que déterminée par chromatographie par perméation de gel par rapport à des étalons en polycarbonate de bisphénol A linéaire, et
un homopolymère de polycarbonate de bisphénol A linéaire ayant une masse moléculaire moyenne en masse de 26 000 à 40 000 grammes par mole, de préférence de 27 000 à 35 000 grammes par mole, telle que déterminée par chromatographie par perméation de gel par rapport à des étalons en polycarbonate de bisphénol A linéaire ;
le copolymère de polycarbonate-siloxane comprend des motifs répétitifs carbonate de bisphénol A et des motifs répétitifs poly(diméthylsiloxane) et a une teneur en siloxane de 15 à 25 % en poids par rapport au poids total du copolymère de polycarbonate-siloxane ;
l'agent absorbant les UV contenant une triazine comprend le 2-(4,6-diphényl-1,3,5-triazin-2-yl)-5-[(hexyl)oxy]phénol ; et
le phosphazène est l'hexaphénoxycyclotriphosphazène.

13. Composition de polycarbonate selon l'une quelconque des revendications 1 à 12, dans laquelle un échantillon moulé de la composition présente :
une valeur delta E inférieure ou égale à 0,75 après exposition à des UVA de 340 nm à 0,5 W/m pendant 7 jours ;
une note UL-94 de V0 pour une épaisseur de 1,5 millimètres ou moins ; de préférence une note UL-94 de V0 pour une épaisseur inférieure ou égale à 1,2 millimètres ; et
une résistance au choc entaillé Izod supérieure à 600 joules par mètre à une température de -30 °C, déterminée conformément à la norme ASTM D256-10.

14. Méthode de préparation de la composition de polycarbonate de l'une quelconque des revendications 1 à 13, la méthode comprenant le mélange à l'état fondu des composants de la composition, et éventuellement l'extrusion de la composition.

15. Article comprenant la composition polycarbonate de l'une quelconque des revendications 1 à 13, éventuellement lequel article est un article façonné, formé, coulé ou moulé, de préférence lequel article est un boîtier pour un dispositif électronique, un connecteur électrique, un composant d'éclairage, un composant d'automobile, un composant d'aéronef, ou un composant de système de communication 5G.
